(19) Europäisches Patentamt
European Patent Office
Office européen des brevets

(11) **EP 3 343 251 B1**

(12) **EUROPEAN PATENT SPECIFICATION**

(45) Date of publication and mention
of the grant of the patent:
**07.04.2021 Bulletin 2021/14**

(21) Application number: **16841187.4**

(22) Date of filing: **26.04.2016**

(51) Int Cl.:
*G02B 5/00* (2006.01)    *G01N 21/17* (2006.01)
*G02B 21/06* (2006.01)    *G01N 21/41* (2006.01)
*G02B 27/30* (2006.01)    *G02B 21/08* (2006.01)
*G01N 15/02* (2006.01)    *G01N 15/14* (2006.01)
*G01N 21/25* (2006.01)    *G01N 15/10* (2006.01)

(86) International application number:
**PCT/JP2016/062999**

(87) International publication number:
**WO 2017/038155 (09.03.2017 Gazette 2017/10)**

(54) **IMAGING METHOD AND LIGHT REGULATION TOOL**

BILDGEBUNGSVERFAHREN UND LICHTREGULIERUNGSWERKZEUG

PROCÉDÉ D'IMAGERIE ET OUTIL DE RÉGULATION DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2015 JP 2015168633**

(43) Date of publication of application:
**04.07.2018 Bulletin 2018/27**

(73) Proprietor: **SCREEN Holdings Co., Ltd.
Kyoto 602-8585 (JP)**

(72) Inventor: **KOBAYASHI, Masayoshi
Kyoto-shi
Kyoto 602-8585 (JP)**

(74) Representative: **Kilian Kilian & Partner
Aidenbachstraße 54
81379 München (DE)**

(56) References cited:
EP-A1- 1 618 349        EP-A2- 0 296 727
JP-A- S64 901           JP-A- H0 381 754
JP-A- H0 588 021        JP-A- H05 303 069
JP-A- H09 328 715       JP-A- 2013 205 041
JP-A- 2013 205 041      JP-A- 2015 118 036
JP-A- 2015 118 036      JP-B2- 2 916 039
JP-U- 3 056 078         US-A1- 2008 088 919

• Anonymous: "CAPILLARY PLATE APPLICATION
  DESCRIPTION", , 1 March 2011 (2011-03-01),
  XP055569103, Retrieved from the Internet:
  URL:https://www.hamamatsu.com/resources/pd
  f/etd/Capillary_TMCP1017E.pdf [retrieved on
  2019-03-14]
• Anonymous: "Collimators for Nuclear Medicine
  Gamma Camera", , 23 June 2015 (2015-06-23),
  XP055569364, Retrieved from the Internet:
  URL:https://web.archive.org/web/2015062320
  5311/http://www.nuclearfields.com/collimat
  ors-nuclear-medicine.htm [retrieved on
  2019-03-14]
• Anonymous: "Microplate Dimensions Guide", ,
  13 March 2008 (2008-03-13), XP055569585,
  Retrieved from the Internet:
  URL:https://www.gbo.com/fileadmin/user_upl
  oad/Downloads/Brochures/Brochures_BioScien
  ce/F073027_Microplate_Dimensions_Guide.pdf
  [retrieved on 2019-03-15]

**Description**

[TECHNICAL FIELD]

This invention relates to a technology for imaging biological specimens carried in a specimen container under illumination and particularly to a technology for adjusting that illumination light.

[BACKGROUND]

In fields of medicine and biochemistry, for the purpose of observing or analyzing biological specimens including cells or bacilli, apparatuses for imaging the biological specimens have been put to practical use. For example, in an imaging apparatus described in patent literature 1, diffused white light serving as illumination light is incident on spheroids (cell clusters) carried in a specimen container called a well plate from above and light transmitted downward is received. In this way, the spheroids serving as biological specimens, which are imaging objects, are imaged.

An imaging method comprising the features of the preamble of claim 1 is known from JP 2015 118036 A. Further prior art is disclosed in EP 0 296 727 A2, EP 1 618 349 A1, US 2008/088919 A1 and the article "Capillary Plate" retrievable from the Internet via the URL: https://www.hamamatsu.com/resources/pdf/etd/Capillary_TMCP1017E.pdf, as well as in JP 2013205041 A.

[CITATION LIST]

[PATENT LITERATURE]

[Patent literature 1] JP 2015-118036A

[SUMMARY]

[TECHNICAL PROBLEM]

Imaging objects included in biological specimens may be, for example, cells or cell colonies two-dimensionally spreading along the bottom surface of a container. In this case, since the cells are close to transparent, sufficient contrast may not be obtained under illumination by diffused light. For such biological specimens, contrast can be improved by performing imaging under illumination by parallel light.

On the other hand, in such an imaging technology, there still remain many cases where diffused light is required as illumination light. Thus, it is convenient if an illumination light source can be switched between diffused light and parallel light. However, parallel light sources are generally complicated in configuration as compared to diffused light sources. Further, knowledge on optics is necessary to select a suitable illumination means according to specimens or purposes. Thus, a problem that it takes time for an inexperienced user to obtain desired image quality may possibly occur. Accordingly, a technology is required which enables imaging to be more conveniently performed under parallel light illumination even if a function of generating parallel light is not added to an imaging apparatus.

[SOLUTION TO PROBLEM]

This invention was developed in view of the above problem and provides a technology enabling imaging to be more conveniently performed under parallel light illumination without requiring an imaging apparatus to have a function of generating parallel light.

The invention is as defined in claim 1. Further preferred embodiments of the invention are subject of the dependent claims. Aspects of the invention are set out below :

One aspect of the invention is directed to an imaging method which comprises the features defined in claim 1 and includes, among others: supporting horizontally a specimen container carrying biological specimens; arranging an illumination light source above the specimen container, a light regulation device between the illumination light source and the specimen container and an imager below the specimen container; and imaging the biological specimens by causing light from the illumination light source to be incident on the biological specimens via the light regulation device and receiving light transmitted downward from the specimen container by the imager, wherein: the light regulation device includes a plate member in a form of a flat plate placeable on the specimen container; a plurality of through holes penetrating from one principal surface side to another principal surface side of the plate member are two-dimensionally and proximately arranged along the one principal surface of the plate member; each through hole is a light-guiding path having a uniform cross-sectional shape along a normal direction to the one principal surface; and a side wall surface of each through hole has a light absorbing property.

In the aspect thus configured, components having a relatively large incident angle, out of the light incident on the one principal surface side of the light regulation device, are absorbed by the light regulation device and light close to parallel light having a traveling direction regulated is emitted from the another principal surface side of the light regulation device. Thus, illumination light converted into substantially parallel light by the light regulation device is incident on the biological specimens carried in the specimen container. Therefore, the biological specimens such as cells two-dimensionally distributed in the specimen container can be imaged with good contrast. Further, the illumination light source may be, for example, a general diffused light source and the illumination light source and the imager need not be modified. Thus, an increase of imaging cost can be suppressed and an imaging failure caused by improper illumination can also be avoided.

Further, another not claimed aspect is directed to a light regulation device with a plate member having a flat plate shape and including a plurality of through holes penetrating from one principal surface side to another principal surface side and two-dimensionally and proximately arranged along the one principal surface and a frame which covers end surfaces of the plate member, the end surfaces being different from the one principal surface and the another principal surface, wherein each through hole is a light-guiding path having a uniform cross-sectional shape along a normal direction to the one principal surface, and a side wall surface of the through hole has a light absorbing property.

Further, another not claimed aspect is directed to a light regulation device with a plate member having a flat plate shape and including a plurality of through holes penetrating from one principal surface side to another principal surface side and two-dimensionally and proximately arranged along the one principal surface and a transparent cover member which covers at least one of the one principal surface and the another principal surface, wherein each through hole is a light-guiding path having a uniform cross-sectional shape along a normal direction to the one principal surface, and a side wall surface of the through hole has a light absorbing property.

These light regulation devices are configured to be applicable to the imaging method described above. Specifically, by arranging the light regulation device configured as described above between the illumination light source and the specimen container, biological specimens can be imaged under parallel light illumination without changing existing imaging apparatus and specimen container at all.

Out of these, in the configuration including the frame for covering the end surfaces of the plate member, the plate member can be mechanically protected by the frame. Thus, a member having a low strength can be used as the plate member. Further, in the configuration including the cover member for covering at least the another principal surface side of the plate member, the plate member can be protected from damage and dust without impairing optical effects exhibited by the plate member. This makes the light regulation device easily handled.

[ADVANTAGEOUS EFFECTS OF INVENTION]

As described above, according to the invention, illumination light having a direction of emitted light regulated is obtained by using a light regulation device. Thus, imaging can be conveniently performed under parallel light illumination without requiring an imaging apparatus to have a function of generating parallel light.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

[BRIEF DESCRIPTIPN OF DRAWINGS]

[FIG. 1] A diagram showing an example of an imaging apparatus to which an embodiment of an imaging method according to the invention is applied
[FIG. 2A] A first view illustrating combinations of an imaging object and an illumination light source
[FIG. 2B] A second view illustrating combinations of an imaging object and an illumination light source
[FIG. 2C] A third view illustrating combinations of an imaging object and an illumination light source
[FIG. 3] A perspective view showing the structure of the regulation plate
[FIG. 4A] A first side view in section of the regulation plate
[FIG. 4B] A second side view in section of the regulation plate
[FIG. 5A] A first view showing the action of the perforated panel
[FIG. 5B] A second view showing the action of the perforated panel
[FIG. 5C] A view showing a comparative example of the perforated panel
[FIG. 6A] A view showing a first example of the cross-sectional shape of the through holes
[FIG. 6B] A view showing a second example of the cross-sectional shape of the through holes

[FIG. 6C] A view showing a third example of the cross-sectional shape of the through holes
[FIG. 6D] A view showing a fourth example of the cross-sectional shape of the through holes
[FIG. 6E] A view showing a fifth example of the cross-sectional shape of the through holes
[FIG. 6F] A view showing a sixth example of the cross-sectional shape of the through holes
[FIG. 7A] A graph for the consideration of a dimensional relationship of the regulation plate
[FIG. 7B] A diagram for the consideration of a dimensional relationship of the regulation plate

[FIG. 8] A table showing an example of effects of the regulation plate

[DESCRIPTION OF EMBODIMENT]

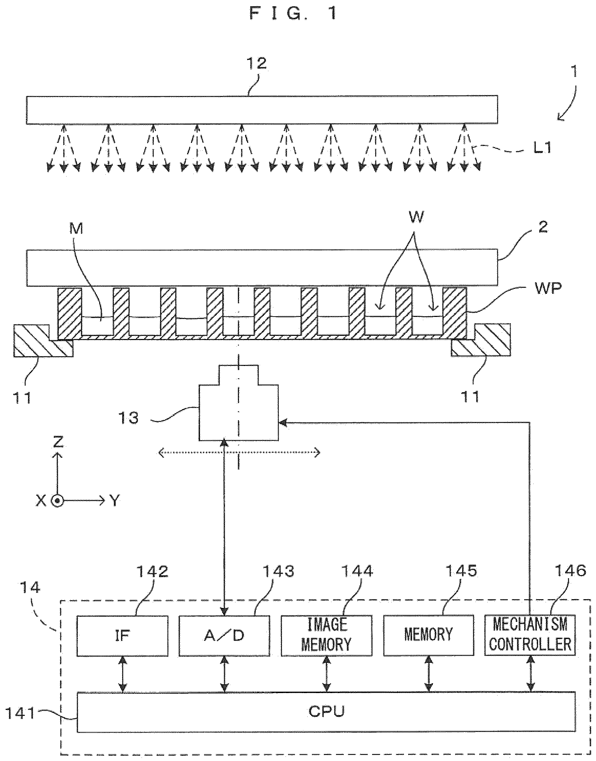

FIG. 1 is a diagram showing an example of an imaging apparatus to which an embodiment of an imaging method according to the invention is applied. In this embodiment, the imaging apparatus images a biological specimen such as a cell cultured in liquid poured into recesses called wells W formed on an upper surface of a well plate WP. The imaging is performed in state that a regulation plate 2 is placed on the upper surface of the well plate WP, and that is one feature of the invention. In FIG.1, the XY plane is a horizontal surface. The Z axis represents the vertical axis. In more detail, the (+Z) direction represents the vertically upward direction.
The well plate WP is generally used in the fields of drug discovery and bioscience. A plurality of wells W having a substantially circular cross-section and a transparent and flat bottom surface are disposed to the upper surface of a plate having a flat plate shape. The number of the wells W on the well plate WP is arbitrary. For example, a well plate WP having 96 (12x8 matrix array) wells can be used. A diameter and a depth of each well W are typically about several mm. Note that the size of a well plate and the number of wells used in this imaging apparatus 1 are arbitrary without being limited to these. For example, well plate having 384 wells may be used. Further, the imaging apparatus 1 can be applied to image the biological specimen not only in the well plate provided with a multitude of wells but also, in a flat container called a "dish", for example.
A predetermined amount of liquid as a culture medium M is poured into each well of the well plate WP. Cells cultured under predetermined culture conditions in this liquid are imaging objects of this imaging apparatus 1. The culture medium M may be added with appropriate reagents or may be gelled after being poured into the wells W in a liquid state. In this imaging apparatus 1, for example, a cell or the like cultured on an inner bottom surface of the well can be an imaging object as described later. About 50 to 200 microliters of the liquid is generally usually used.
Note that an isolated cell, a cell colony formed by many cells two-dimension ally distributing in the culture medium, a spheroid (cell cluster) formed by cells gathering three-dimensionally in the culture medium or the like can be applied as the biological specimen cultured in the culture medium and to be imaged. Further, an imaging biological specimens such as a bacillus or an organic tissue can be performed by using the imaging apparatus 1. Hereinafter, these imaging objects are generically called a "cell or the like".
The imaging apparatus 1 includes a holder 11 which holds the well plate WP carrying sample together with the culture medium in each well W. The holder 11 holds the well plate WP in a substantially horizontal posture by being held in contact with a peripheral edge part of the lower surface of the well plate WP. Further, the imaging apparatus 1 includes an illuminator 12 arranged above the holder 11, an imager 13 arranged below the holder 11 and a controller 14 which includes a CPU 141 controlling the operation of these components.
The illuminator 12 emits appropriate diffused light (e.g., white light) toward the well plate WP held by the holder 11. More specifically, for example, a combination of a white LED (light emitting diode) as a light source and a diffusion plate may be used as the illuminator 12. A light emitting surface on a lower part of the illuminator 12 has a planar size larger than the upper surface of the well plate WP and is provided to entirely cover an area of the upper surface of the well plate WP where the wells W are formed. In such a configuration, the cells or the like in each well W provided in the well plate WP are uniformly illuminated from above by diffused light L1 emitted in various directions from each part of the lower part of the illuminator 12.
The imager 13 is provided below the well plate WP held by the holder 11. In the imager 13, an imaging optical system not shown in the figure is arranged at a position right below the well plate WP. An optical axis of the imaging optical system extends in a vertical direction (Z direction).
The imaging of the biological specimen in the well W is performed by the imager 13. Specifically, light emitted from the illuminator 12 and incident on the surface of the culture medium M from above the well W illuminates the cell or the like which is the imaging object. Light transmitted downward from the bottom surface of the well W is incident to a light receiving surface of an imaging element not shown via the imaging optical system. An image of the imaging object is formed on the light receiving surface of the imaging element by the imaging optical system is imaged by the imaging element. A CCD sensor or a CMOS sensor can be used as the imaging element. Either a two-dimensional image sensor or a one-dimensional image sensor can be used.
The imager 13 is capable of moving in the XYZ directions by a mechanism controller 146 provided in the controller 14. Specifically, the mechanism controller 146 moves the imager 13 in the X direction and the Y direction based on a control command from the CPU 141. By doing so, the imager 13 moves relative to the well W in the horizontal direction. Further, focusing is performed by moving the imager 13 in the Z direction. When imaging is performed with the imaging object in a well W, the mechanism controller 146 positions the imager 13 in the horizontal direction such that the optical axis of the imaging optical system coincides with the center of the well W. When the imaging element of the imager 13 is a one-dimensional image sensor, a two-dimensional image can be obtained by scanning the imager 13 to an orthogonal direction to a longitudinal direction of the image sensor. By imaging in this manner, imaging can be performed in a non-contact, non-destructive and non-invasive manner with the spheroid as the imaging object, thereby damage to the cell or the like caused by imaging can be suppressed.

The image signal output from the imaging device of the imager 13 is send to the controller 14. Specifically, the image signal is input to an AD converter (A/D) 143 provided in the controller 14 and converted into digital image data. The CPU 141 performs appropriate image processings based on the received image data. The controller 14 further includes an image memory 144 for storing image data and a memory 145 for storing programs to be executed by the CPU 141 and data generated by the CPU 141, but these may be integrated. The CPU 141 performs variable calculation processings described later by executing a control program stored in the memory 145.

Besides, the controller 14 is provided with an interface (I/F) 142. The interface 142 has a function of performing data exchange with an external apparatus connected via a communication line besides a function of receiving an operation input from a user and presenting information such as processing results to the user. Note that the controller 14 may be an exclusive device including above hardware or may be a general-purpose processing device such as a personal computer or a workstation installed with the control program for performing the process described above. Specifically, a general-purpose computer apparatus may be used as the controller 14 of the imaging apparatus 1. When a general-purpose processing device is used as the controller 14, the imaging apparatus 1 may have just a minimal control function for controlling each components of the imager 13.

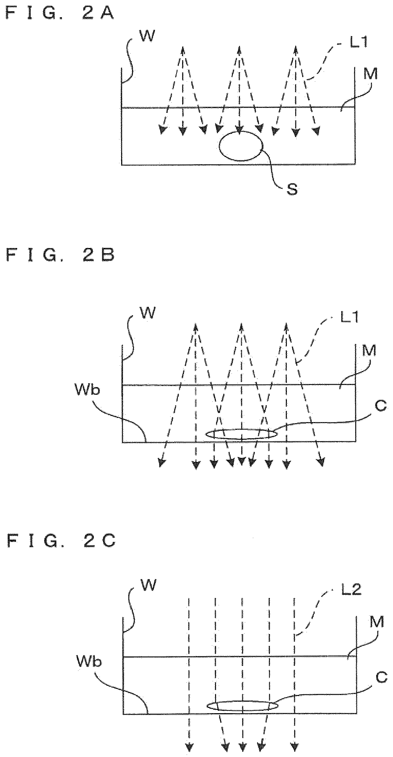

FIGS. 2A, 2B and 2C are views illustrating combinations of an imaging object and an illumination light source. FIG. 2A shows a case where the imaging object in the well W is, for example, a spheroid S having a three-dimensional shape in the culture medium M. In this case, a wide range of the surface of the spheroid S is effectively illuminated by the incidence of the diffused light L1 emitted from the illumination unit 12. Thus, it is possible to image an image with good contrast.

On the other hand, FIG. 2B shows a case where the imaging object is cells (or cell colony) C two-dimensionally and thinly spreading in the culture medium M along an inner bottom surface Wb of the well W. In this case, since the cells themselves are close to transparent, it is difficult to obtain high contrast. A phenomenon in which a direction of emitted light changes due to peripheral edge parts of the cells C acting as if they were lenses is known. Under illumination by diffused light, it is difficult to selectively detect such light. In such a case, illumination light L2 close to parallel light as shown in FIG. 2C is more preferable. Since the illumination light L2 is refracted by the peripheral edge parts of the cells C, the peripheral edge parts of the cells C have a lower luminance than other areas in an imaged image and the contours of the cells C more clearly appear.

Besides the purpose of observing the surfaces and inner textures of the cells or the like in detail, imaging may be performed for the purpose of automatically measuring the sizes or number of cells distributed in the well W at a high speed. Particularly in such a use, an image in which contour parts of the cells or the like are expressed at a luminance clearly different from that of surrounding background parts is useful.

As just described, the illumination means needs to be used according to an imaging object and the purpose of imaging. Thus, the imaging apparatus 1 is desirably such that illumination light to be emitted from the illumination unit 12 can be switched between diffused light and parallel light according to the imaging object. However, it leads to the enlargement/complication of the apparatus configuration and causes an increase of imaging cost to provide two types of light sources in the imaging apparatus 1 or provide a mechanism for generating parallel light from diffused light in a pseudo manner. Further, as a result of using illumination unsuitable for matching with an imaging object, a failure to obtain desired image quality may be possibly caused.

Accordingly, in the imaging method according to this invention, only the illumination unit 12 for emitting diffused light is provided in the imaging apparatus 1. If parallel light is necessary as illumination light, a regulation plate 2 to be described next is placed atop the well plate WP. This causes the illumination light L2, which is substantially parallel light, to be incident on the imaging objects in the wells W. Specifically, the regulation plate 2 has a function of causing light components having an incident angle equal to or smaller than a predetermined angle on the upper surface, out of the diffused light emitted from the illumination unit 12, to pass to a lower surface side and, on the other hand, absorbing light components having an incident angle larger than the predetermined angle to regulate the passage thereof to the lower surface side. Substantially parallel light having a traveling direction regulated, more specifically having the traveling direction inclined at the predetermined angle or smaller with respect to the imaging direction (Z direction) of the imaging unit 13 is emitted from the lower surface of the regulation plate 2 and incident on each well W.

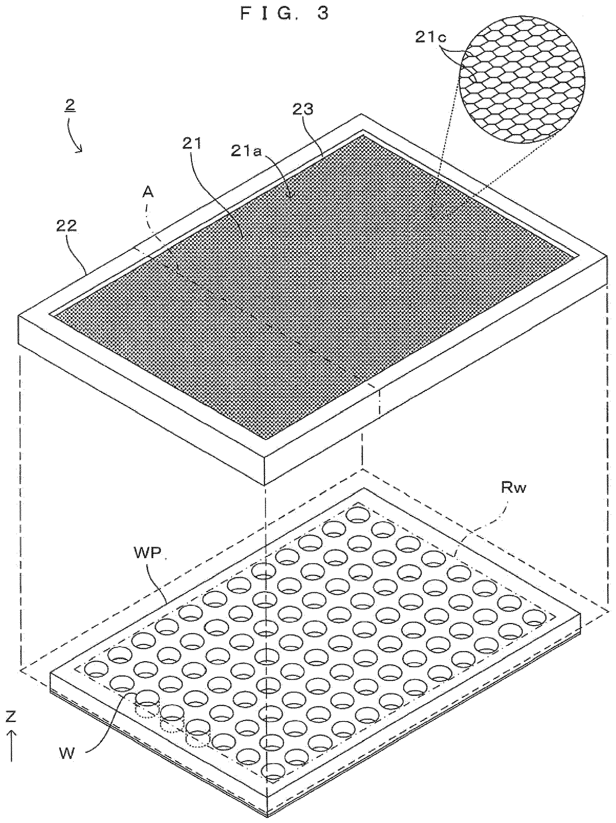

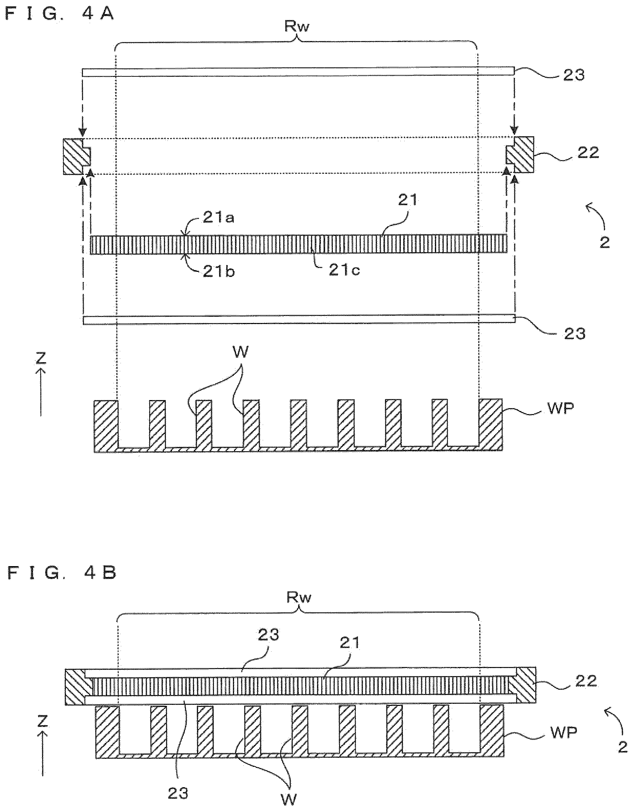

FIG. 3 is a perspective view showing the structure of the regulation plate. Further, FIGS. 4A and 4B are side views in section of the regulation plate. More specifically, FIG. 4A is an exploded schematic when a cross-section of the regulation plate 2 is viewed in a section A of FIG. 3, and FIG. 4B is a sectional view showing a state where the regulation plate 2 is placed on the well plate WP.

A main part of the regulation plate 2 is a perforated panel 21 having a planar size to entirely cover an area Rw of the upper surface of the well plate WP where the wells W are arranged. The perforated panel 21 has a flat plate-like outer shape in which both principal surfaces 21a, 21b are parallel. A multitude of through holes 21c penetrating from the side of one principal surface 21a toward the side of the other principal surface 21b perpendicularly to these principal surfaces, i.e. in a direction parallel to normals to these principal surfaces are provided. The through holes 21c are arrayed two-dimensionally and regularly in directions along the principal surfaces. A partially enlarged view of the one principal surface 21a of the perforated panel 21 is shown in a right-upper circle of FIG. 3. As shown in this partially enlarged view, each through hole 21c has a hexagonal cross-section and the perforated panel 21 has a so-called honeycomb structure. Such a structure is light in weight and high in strength.

Note that, in the following description, the one principal surface 21a on an upper side facing the illumination unit 12 when the regulation plate 2 is placed on the well plate WP, out of the both principal surfaces 21a, 21b of the perforated panel 21, is referred to as an "upper surface" and the other principal surface 21b on a lower side facing the upper surface of the well plate WP is referred to as a "lower surface" in some cases. The regulation plate 21 itself is structured to be undistinguishable on front and back sides as described below, and functions in the same way even if being turned upside down.

The perforated panel 21 is housed in a frame 22 having a rectangular outer shape and provided with a rectangular opening, and side surfaces of the perforated panel 21 are protected by the frame 22. Further, cover members 23, 23 formed of a transparent material such as acrylic resin, in the form of thin plates and having the same shape are fitted into the frame 22 to sandwich the perforated panel 21. The upper surface 21a and the lower surface 21b of the perforated panel 21 are protected by being covered by these cover members 23, 23. Note that the cover member may be provided only on either one of the upper surface 21a and the lower surface 21b of the perforated panel 21.

As just described, the upper and lower surfaces 21a, 21b of the perforated panel 21 are protected by the cover members 23, 23 and the side surfaces of the perforated panel 21 are protected by the frame 22. Due to such a structure, the perforated panel 21 itself is not required to have large mechanical strength. Thus, a honeycomb panel structured by overlapping a multitude of strip-like metal foils (e.g. aluminum foils), partially joining those metal foils and spreading the joined assembly in an overlapping direction can be, for example, used as the perforated panel 21. In this case, a width of the strip-like metal foils becomes a depth of the through holes 21c. Honeycomb panels having such a structure come in various sizes and are already commercialized.

The regulation plate 2 structured by combining the respective members described above is placed on the well plate WP in a horizontal orientation in a state where the upper surface 21a of the perforated panel 21 is facing upward with the lower surface of the lower cover member 23 held in contact with the upper surface of the well plate WP as shown in FIG. 4B. Thus, an axial direction of each through hole 21c provided in the perforated panel 21 is the vertical direction (Z direction).

The regulation plate 2 needs to be placed such that the entire area Rw of the upper surface of the well plate WP where the wells W are arranged is covered by the perforated panel 21. For this purpose, engaging parts for positioning the regulation plate 2 by being engaged with the well plate WP may be provided between the regulation plate 2 and the well plate WP at least on the lower surface side of the regulation plate 2. It is not necessary to distinguish upper and lower sides of the regulation plate 2 if the engaging parts are provided on both the upper and lower surface sides of the regulation plate 2.

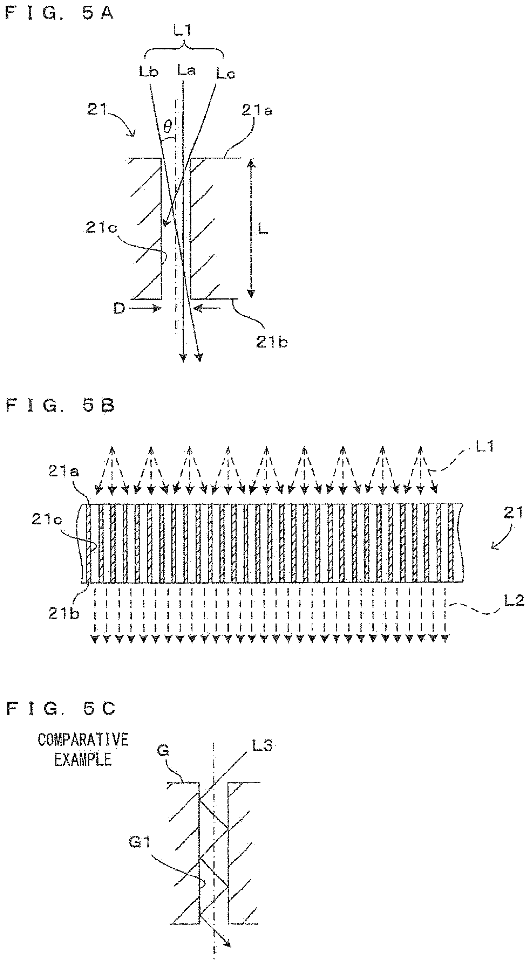

FIGS. 5A, 5B and 5C are views showing the action of the perforated panel. As described above, the perforated panel 21 includes the multitude of through holes 21c penetrating from the one principal surface (upper surface) 21a to the other principal surface (lower surface) 21b substantially perpendicularly to the both principal surfaces. A cross-sectional shape of each through hole 21c is constant in the axial direction (Z direction) of the through hole from the one principal surface toward the other principal surface. Focusing on the action of the individual through hole 21c, the diffused light L1 having components La, Lb and Lc in various directions is incident on the through hole 21c from the illumination unit 12 arranged to face the upper surface 21a as shown in FIG. 5A.

The light component La having a small incident angle and incident in parallel to or at a very small angle to the axial direction (Z direction) of the through hole 21c shown by dashed-dotted line propagates straight in the through hole 21c and is emitted downward or substantially downward from an opening on the side of the lower surface 21b. On the other hand, the light component Lc having a sufficiently large incident angle is incident on the inner wall surface of the through hole 21c from an opening of the through hole 21c on the side of the upper surface 21a.

To remove light components having such large incident angles, the inner wall surfaces of the through holes 21c are blackened or painted in black in the perforated panel 21. Thus, the inner wall surfaces of the through holes 21c have a light absorbing property and reflectance on the wall surfaces is very low. Therefore, light incident at a large incident angle on the through hole 21c is absorbed by the inner wall surface and almost no light is emitted from the opening on the side of the lower surface 21b.

An incident angle θ of the light component Lb inclined most, out of the light components incident on the through hole 21c from the side of the upper surface 21a and emitted from the side of the lower surface 21b without being absorbed by the side wall surface, is dependent on an opening width D and an axial length (i.e. thickness of the perforated panel 21) L of the through hole 21c. As is clear from FIG. 5A, the angle θ is expressed by the following equation:

$$\tan\theta = D/L \qquad \dots \text{(Equation 1)}.$$

Specifically, by appropriately selecting the opening width D and axial length L of the through hole 21c, the maximum incident angle θ of light emitted from the lower surface of the regulation plate 2 without being absorbed in the through holes 21c can be adjusted.

The light emitted from the lower surface 21b of the perforated panel 21 includes only components whose angle of inclination to the Z direction, which is the axial direction of the through holes 21c, i.e. the vertical direction is equal to or smaller than the above angle θ. By setting the opening width D of the through holes 21c sufficiently small and setting the axial length L sufficiently large, the regulation plate 2 can illuminate the well plate WP by generating the substantially parallel illumination light L2 from the diffused light L1 irradiated from the illumination unit 12. A right side of (Equation 1) represents a round number of an NA (numerical aperture) of an illumination system including the illumination unit 12 and the regulation plate 2. More strictly, the NA is expressed by the following equation:

$$NA = D/\{L^2+(D/2)^2\}^{1/2} \qquad \dots \text{(Equation 2)},$$

and can be approximately expressed as (D/L) if L»D. As just described, the NA of the emitted light can be controlled by setting the opening width D and axial length L of the through holes 21c.

Note that examples of using a honeycomb structure for the purpose of controlling a traveling direction of light are conventionally known. For example, in a general imaging technology, an illumination range is limited by arranging a device called a "honeycomb grid" on the front surface of an illumination light source. Such a device is for concentrating illumination light emitted at a wide angle in a narrower range. Thus, inner wall surfaces of through holes are reflective so that light power can be effectively utilized. Therefore, as shown as a comparative example in FIG. 5C, light L3 incident at a relatively large incident angle on an opening on one principal surface side of a through hole G1 of a honeycomb grid G is reflected inside the through hole and emitted from an opening on the other principal surface side. Specifically, the regulation plate 2 for generating substantially parallel light by removing light components not parallel to the imaging direction from the diffused light is different in purpose from such a device.

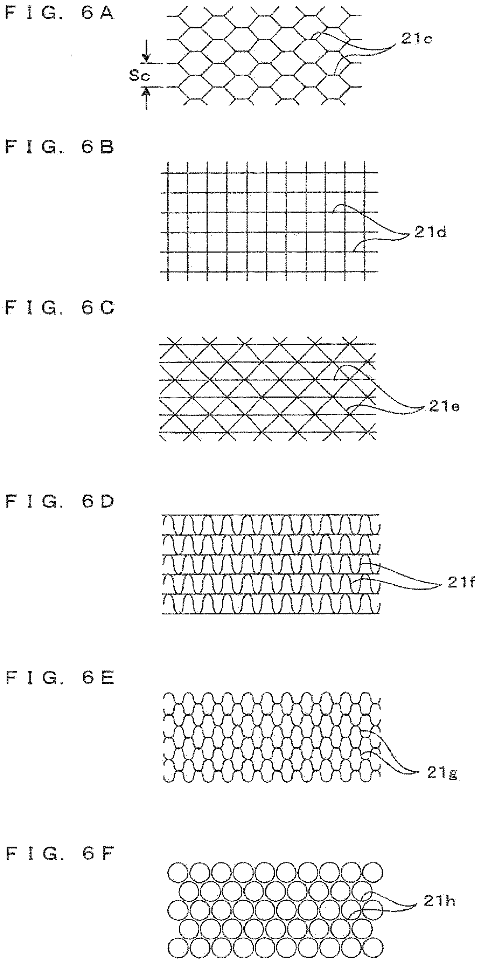

FIGS. 6A, 6B, 6C, 6D, 6E and 6F are views showing various examples of the cross-sectional shape of the through holes. The perforated panel 21 described above is a honeycomb panel and the cross-section and the opening shape of each through hole 21c are hexagonal as shown in FIG. 6A. In this case, the cross-section needs not be hexagonal, but the through holes 21c having the same shape can be closely arranged by being formed into a hexagonal shape in which facing sides are parallel. Since light incident on the upper surfaces of partition wall parts partitioning between adjacent through holes 21c becomes loss without passing to the lower surface side, partition walls are preferably as thin as possible. Also from this point, a honeycomb structure formed of strip-like foils can be said to be preferable.

Besides this, strip-like members may be combined into a lattice, for example, as shown in FIG. 6B and through holes 21d having a rectangular cross-section may be formed. Further, strip-like members may be combined at three different angles as shown in FIG. 6C and through holes 21e having a triangular cross-section may be formed. Further, flat strip-like members and periodically wavy strip-like members may be combined and through holes 21f shaped as shown in FIG. 6D may be formed. Further, periodically wavy strip-like members may be combined in opposite phases and through holes 21g shaped as shown in FIG. 6E may be formed. In this way, perforated panels having through holes having various cross-sectional shapes can be used. The perforated panels having the cross-sectional shapes of the through holes described above are thought to be relatively easily industrially produced.

Specifically, by employing such a structure that a multitude of strip-like members having a width equal to a length of through holes are locally joined between adjacent ones of the strip-like members and separated in parts other than the joined parts, a multitude of through holes in which surfaces of the strip-like members serve as side wall surfaces can be realized. For example, by forming a structure by overlapping strip-like members aligned at positions in a width direction in a thickness direction and locally joining adjacent ones of the strip-like members at a plurality of positions and spreading this structure in the thickness direction of the strip-like members, structures as shown in FIGS. 6A and 6E can be realized.

Further, a perforated panel structured by perforating a multitude of through holes 21h in a flat plate-like member as shown in FIG. 6F may be employed. In this case, an interval between adjacent ones of the through holes 21h is desirably as small as possible to suppress light loss. Specifically, a ratio (opening ratio) of an opening area to a surface area of the perforated panel is desirably as close to 100 % as possible.

Note that in applying the opening width D to (Equation 1), if the through hole has a circular cross-sectional shape, a diameter of this circle can be set as the opening width D. On the other hand, if the cross-sectional shape is not circular, a length of a longest line segment drawn in the opening (e.g. diagonal in the case of a rectangular shape) can be regarded as the opening width D that gives a maximum illumination angle of illumination.

Further, even if the cross-sectional shape and the cross-sectional size are not the same among the plurality of through holes, the effect of regulating the direction of the illumination light described above can be expected to some extent. However, the cross-sectional shapes and sizes of the respective through holes are more preferably the same to cause the illumination light to be uniformly incident on each part of the wells W.

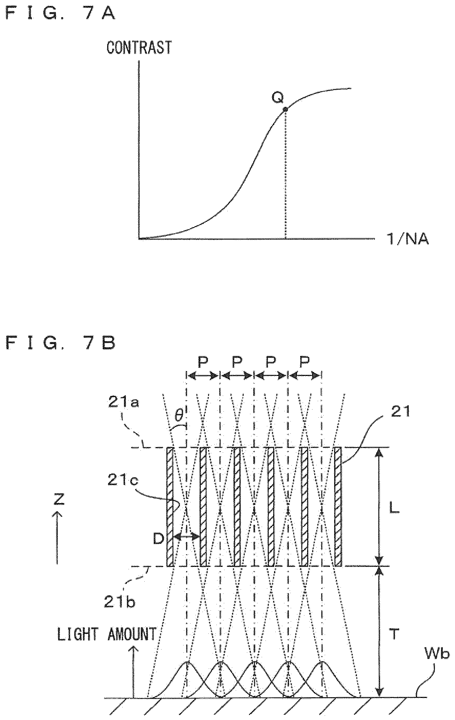

FIGS. 7A and 7B are a graph and a diagram for the consideration of a dimensional relationship of the regulation plate. More specifically, FIG. 7A is a graph showing a relationship between the NA of the illumination system and image contrast when thin cells are imaged. Further, FIG. 7B is a diagram showing a preferred dimensional relationship of each part of the regulation plate. When the two-dimensionally spreading thin cells C are an imaging object as shown in FIG. 2B, obtained contrast is low if an inverse of the NA of the illumination system (1/NA) is small as shown in FIG. 7A. Although contrast increases if the inverse of the NA (1/NA) increases, a contrast increase is finally saturated.

From this, under illumination by diffused light having a large NA, high contrast cannot be obtained and illumination by light close to parallel light is required, but parallel light having extremely high accuracy is not required. As shown in FIG. 7A, it is realistic to set the dimensions of each part of the regulation plate 2 such that a corresponding NA is obtained at a point Q where the contrast increase slows down. Alternatively, such a dimensional relationship as to give an NA corresponding to a required contrast value may be employed.

FIG. 7B shows a dimensional relationship necessary to obtain a uniform illumination condition in the well W. Here is described a method for obtaining such a relationship that an illuminance distribution is constant on the inner bottom surface Wb of the well W to which the cells or the like adhere. As shown by dotted line in FIG. 7B, light components whose incident angle on the upper surface 21a of the perforated panel 21 is equal to or smaller than the predetermined angle θ, out of the light emitted from the illumination unit 12, are incident on the well inner bottom surface Wb. A light quantity distribution of light passing through one through hole 21c has a bell-shaped distribution centered on a center axis (shown by dashed-dotted line) of this through hole 21c. By partial overlapping of light quantity distributions by a plurality of proximately arranged through holes 21c, the illuminance distribution obtained by combining those light quantity distributions approximates to a uniform illuminance distribution.

Reference sign T denotes a distance from the lower surface 21b of the perforated panel 21 to the well inner bottom surface Wb on which the cells or the like are present. If the regulation plate 2 is placed on the well plate WP, the distance T is equivalent to the sum of a depth of the wells W and a thickness of the cover member 23 on the lower side. In the absence of the cover member on the lower side, the distance T is equal to the depth of the wells W. If this distance T is short or the NA of the illumination system ($\approx$ D/L) is small, the overlap of the light quantity distributions is small between proximate through holes 21c and the uniformity of the illuminance distribution is impaired.

If a light quantity distribution of light emitted from the individual through hole 21c is twice an arrangement pitch P between the through holes 21c or larger, the illuminance distribution by the overlap of the light quantity distributions can be made substantially uniform. A condition for this can be expressed by the following equation from FIG. 7B:

$$ P \leq D(1/2+T/L) \approx L \cdot NA(1/2+T/L) = NA(L/2+T) \qquad \text{... (Equation 3).} $$

A longest distance between the centers of one through hole and the other through hole, out of the through holes adjacent to the one through hole, serves as the arrangement pitch P in (Equation 3). In the hexagonal through holes 21c, distances between the centers of the one through hole and six hexagons adjacent to the one through hole are equal, and this distance is the arrangement pitch P. Further, in the rectangular through holes 21c, a longest distance between one rectangle and the other rectangle having a vertex in contact with the one rectangle and located at a diagonal position, out of eight rectangles surrounding the one rectangle, is the arrangement pitch P. An opening width in a direction parallel to a line segment connecting the centers of those (i.e. direction of a diagonal) is the opening width D in (Equation 3).

For example, if the thickness L of the perforated panel 21 is 7 mm and the distance T to the well inner bottom surfaces Wb is 10 mm, the opening width D of the through holes 21c may be set at 0.7 mm and the arrangement pitch P thereof may be set at 1.35 mm or smaller if it is attempted to obtain image contrast equivalent to an NA = 0.1. In other words, by using the regulation plate 2 having such a dimensional relationship, an image having a contrast equivalent to an NA = 0.1 can be imaged using a diffused light source having a larger NA. If a plurality of types of regulation plates different in the dimensions of each part are prepared, an appropriate regulation plate can be selected and used according to a use application.

As just described, by configuring the regulation plate 2 as a small-size, light-weight and portable member without configuring it as a constituent component of the imaging apparatus 1, an image with good image quality can be obtained by adjusting the NA of illumination by a simple configuration.

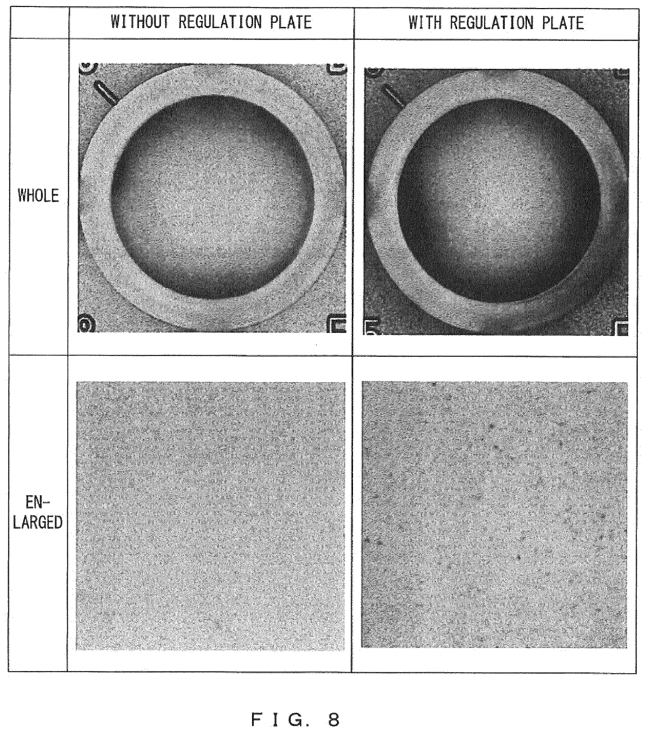

FIG. 8 is a table showing an example of effects of the regulation plate. The inventor verified differences between images due to the presence or absence of the regulation plate 2 by imaging the same thinly distributing biological specimens such as cells on the inner bottom surface of the well W using the imaging apparatus 1 having a diffused light source as the illumination unit 12. In FIG. 8, two images in an upper row are images obtained by imaging the entire well W, and two images in a lower row are partially enlarged views. Further, two images in a left column are images imaged without using the regulation plate 2, and two images in a right column are images imaged with the regulation plate 2 placed on the well plate WP.

The regulation plate 2 used in an experiment uses a honeycomb panel having a cell size (dimension Sc shown in FIG. 6A) of 0.7 mm and a thickness of 7 mm as the perforated panel 21.

As understood from FIG. 8, there is little contrasting density difference between parts where the cells or the like are present and a background part and the contours of the cells or the like are unclear in the image imaged without using the regulation plate 2. In contrast, the brightness of the entire image is slightly reduced, but a contrasting density difference between parts corresponding to the cells or the like and the background part is more notable in the image imaged using the regulation plate 2. From this, it is understood that the latter image is suitable in measuring the number, sizes, positions and the like of the cells or the like.

As described above, in the imaging method of this embodiment using the imaging apparatus 1 including the diffused light source as the illumination light source, imaging is performed with the regulation plate 2 for regulating the direction of passing light arranged between the illumination unit 12 and the well plate WP carrying biological specimens. The regulation plate 2 needs not be a constituent component of the imaging apparatus 1 and is configured as a small and light independent member having about the same size as the well plate WP. The regulation plate 2 has a function of causing only substantially parallel light components, out of incident diffused light, to selectively pass therethrough. Only by placing the regulation plate 2 on the well plate WP, illumination light close to parallel light for obtaining necessary contrast can be obtained. Thus, imaging can be performed under parallel light illumination by a simple configuration without adding a new configuration to the apparatus.

Further, the regulation plate 2 is not attached to the imaging apparatus 1 and is carried into and out of the imaging apparatus 1 similarly to the well plate WP. Thus, an imaging failure due to erroneous application of the regulation plate 2 to specimens not requiring the regulation plate 2 is avoided.

As described above, in the above embodiment, the regulation plate 2 corresponds to a "light regulation device" of the invention and the perforated panel 21 functions as a "plate member" of the invention. Further, a space in a hollow part enclosed by the side wall surface of the through hole 21 corresponds to a "light-guiding path" of the invention. Further, the frame 22 corresponds to a "frame" of the invention and the cover member 23 corresponds to a "cover member" of the invention. Further, in the imaging apparatus 1 described above, the illuminator 12 and the imager 13 respectively function as an "illumination light source" and an "imager" of the invention. Further, in the above embodiment, the well plate WP corresponds to a "specimen container" of the invention.

Note that the invention is not limited to the above embodiment and various changes other than those described above can be made without departing from the scope of the invention as defined by the claims. For example, in the regulation plate 2 described above, the perforated panel 21 is housed in a space enclosed by the frame 22 and the cover members 23, 23 to protect the perforated panel 21 from breakage, the entrance of dust and the like. However, the frame 22 and the cover members 23 are not necessarily essential components for the function of controlling the illumination.

For example, in the above embodiment, the hollow insides of the through holes can be filled with a material transparent to illumination light (e.g. acrylic resin or polycarbonate resin). In such a configuration, the perforated panel itself can have sufficient strength since the through holes become solid, and the either one or both of the frame and the cover members can be omitted.

Further, the honeycomb panel formed of metal foils is used as the perforated panel 21 in the above embodiment. However, the material of the perforated panel is not limited to this. For example, a honeycomb panel formed using paper or aramid resin as a raw material can be used. Even in this case, light reflectance on the surface of the raw material is preferably suppressed to be small, for example, by painting or dyeing in black.

Further, it is assumed that the regulation plate 2 of the above embodiment is placed atop the well plate WP. However, a spacer member to be sandwiched between the regulation plate 2 and the well plate WP may be separately prepared to adjust a distance from the regulation plate to the well inner bottom surfaces. In such a configuration, the NA of the illumination system can be changed within a predetermined range by using the spacer member and image quality can be finely adjusted.

As the specific embodiment has been illustrated and described above, the light regulation device may be so configured as to pass light incident on the one principal surface at an incident angle equal to or smaller than an angle $\theta$, thereby causing the light to be incident on the specimen container and block the light incident at an angle larger than the angle $\theta$. The angle $\theta$ satisfies a relationship of a following equation:

$$\tan\theta = D/L,$$

where D denotes a maximum opening width in a cross-section of the light-guiding path and L denotes a length of the light-guiding path in the normal direction. According to such a configuration, the range of the incident angle of the light incident on the specimen container can be arbitrarily regulated by adjusting the opening width and length of the conductive paths.

Further, in the imaging method according to the invention, the light regulation device is placed on the upper surface of the specimen container. In such a configuration, it is not necessary to separately provide a member and a mechanism for holding the light regulation device and easily determine a distance from the through holes to biological specimens serving as an imaging object. Further, by arranging the light regulation device at a position distant from the illumination light source and close to the biological specimens, it can be suppressed that the light emitted from the through holes comes to have properties as diffused light again such as due to reflection in the container.

Further, for example, the plurality of through holes is arranged at a constant pitch P and a following equation may be satisfied:

$$P \leq D \cdot (1/2 + T/L),$$

where D denotes a maximum opening width in a cross-section of the light-guiding path, L denotes a length of the light-guiding path in the normal direction and T denotes a distance from the another principal surface of the light regulation device to an inner bottom surface of the specimen container. In such a configuration, distributions of the light emitted from the proximately arranged through holes overlap each other, whereby an illumination condition close to uniform illumination can be realized.

Further, the illumination light source may be, for example, configured to emit diffused light downward. A diffused light source has a relatively simple configuration and can be realized at low cost as an illumination light source in an apparatus for imaging biological specimens, and the light regulation device of the invention can generate substantially parallel illumination light from the diffused light by a simple configuration. By combining these, it is possible to obtain an image of desired quality while suppressing imaging cost.

Further, for example, the plate member may include a plurality of strip members having a width equal to the length of the through holes in the normal direction, and the plurality of strip members may be partially joined and separated from each other in parts other than joined parts, whereby the through holes are formed. For example, a technology for manufacturing a flat plate-like member having an opening shape as described above by spreading an assembly of a plurality of strip-like members having a width equal to a length of through holes and partially joined in a lamination direction of the strip-like members has been put to practical use and this can be utilized.

Further, for example, the respective cross-sectional shapes of the plurality of through holes may be the same. In such a configuration, light passing through each through hole is uniform among the through holes, wherefore a uniform illuminance distribution is easily obtained.

Further, the cross-sectional shape of the through hole is arbitrary. However, if the cross-sectional shape is a polygonal shape, particularly a hexagonal shape having parallel facing sides, manufacturing cost can be suppressed to be low due to easy industrial production.

The strip members in this case can be, for example, metal foils having surfaces blackened. By blackening the surfaces, light reflection on the side wall surfaces of the through holes can be suppressed and it can be suppressed that the light incident at a large incident angle on the one principal surface side passes through the through holes and is emitted from the other principal surface side.

Further, for example, the insides of the through holes may be filled with a transparent solid. In such a configuration, since the insides of the through holes are solid, mechanical damage and clogging caused by opaque dust and the like can be prevented and the light regulation device is more easily handled.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the invention covers any such modifications or embodiments as fall within the scope of the claims.

[INDUSTRIAL APPLICABILITY]

The invention is suitable in the case of imaging specimens, for which sufficient contrast cannot be obtained under diffused light illumination, such as cells or cell colonies two-dimensionally cultured in a culture medium using an imaging apparatus including a diffused light source as illumination light.

[Reference Signs List]

| | |
|---|---|
| 1 | imaging apparatus |
| 2 | regulation plate (light regulation device) |
| 12 | illuminator (illumination light source) |
| 13 | imager |
| 21 | perforated panel (plate member) |
| 21a | one principal surface (of the perforated panel) |
| 21b | another principal surface (of the perforated panel) |
| 21c | through hole |
| 22 | frame |
| 23 | cover member |
| W | well |
| WP | well plate |

**Claims**

1.  An imaging method, comprising:

    supporting horizontally a specimen container (WP) carrying biological specimens;
    arranging an illumination light source (12) above the specimen container (WP), a light regulation device (2) between the illumination light source (12) and the specimen container (WP) and an imager (13) below the specimen container (WP); and
    imaging the biological specimens by causing light from the illumination light source (12) to be incident on the biological specimens via the light regulation device (2) and receiving light transmitted downward from the specimen container (WP) by the imager (13), **characterized in that**:

    the light regulation device (2) includes a plate member (21) in a form of a flat plate placeable on the specimen container (WP);
    a plurality of through holes (21c) penetrating from one principal surface (21a) side to another principal surface side (21b) of the plate member (21) are two-dimensionally and proximately arranged along the one principal surface (21a) of the plate member (21);
    each through hole (21c) is a light-guiding path having a uniform cross-sectional shape along a normal direction to the one principal surface (21a);
    a side wall surface of each through hole (21c) has a light absorbing property; wherein
    the light regulation device (2) passes light incident on the one principal surface (21a) at an incident angle equal to or smaller than an angle θ, thereby causes the light to be incident on the specimen container (WP), and blocks the light incident at an angle larger than the angle θ,
    the angle θ satisfying a relationship of a following equation:

    $$\tan\theta = D/L,$$

    where D denotes a maximum opening width in a cross-section of the light-guiding path and L denotes a length of the light-guiding path in the normal direction,
    the plurality of through holes (21c) are arranged at a constant pitch P and a following equation is satisfied:

$$P \leq D \cdot (1/2 + T/L),$$

where T denotes a distance from the another principal surface (21b) of the light regulation device (2) to an inner bottom surface of the specimen container (WP),

wherein the light regulation device (2) is placed on an upper surface of the specimen container (WP), or on a spacer member sandwiched between the regulation plate (2) and the well plate (WP), and

wherein the light regulation device (2) covers entirely the upper surface of the specimen container (WP).

2. The imaging method according to claim 1, wherein the illumination light source (12) emits diffused light downwardly.

3. The imaging method according to claim 1 or 2, wherein the pitch P satisfies a relationship of a following equation:

$$P \leq NA \cdot (L/2 + T),$$

where NA denotes a numerical aperture of illumination light which is determined based on a required contrast value in the imaging.

4. The imaging method according to any one of claims 1 to 3, wherein the light regulation device (2) includes a frame (22) which covers end surfaces of the plate member (21), the end surfaces being different from the one principal surface (21a) and the another principal surface (21b), and

wherein the light regulation device (2) includes a transparent cover member (23) which covers at least one of the one principal surface (21a) and the another principal surface (21b).

5. The imaging method according to any one of claims 1 through 4, wherein the plate member (21) includes a plurality of strip members having a width equal to the length of the through holes (21c) in the normal direction, and the plurality of strip members are partially joined and separated from each other in parts other than joined parts, whereby form the through holes (21c).

6. The imaging method according to claim 5, wherein the strip members are metal foils having surfaces blackened.

7. The imaging method according to any one of claims 1 through 6, wherein the respective cross-sectional shapes of the plurality of through holes (21c) are same.

8. The imaging method according to claim 7, wherein the cross-sectional shape of the through hole (21c) is a polygonal shape.

9. The imaging method according to claim 8, wherein the cross-sectional shape of the through hole (21c) is a hexagonal shape having parallel facing sides.

10. The imaging method according to any one of claims 1 through 9, wherein insides of the through holes (21c) are filled with a transparent solid.


**Patentansprüche**

1. Bildgebungsverfahren, umfassend:

horizontales Abstützen eines Probenbehälters (WP) mit biologischen Präparaten;
Anordnen einer Beleuchtungslichtquelle (12) oberhalb des Probenbehälters (WP), einer Lichtregulierungsvorrichtung (2) zwischen der Beleuchtungslichtquelle (12) und dem Probenbehälter (WP) und eines Bildwandlers (13) unterhalb des Probenbehälters (WP); und
Abbilden der biologischen Proben, indem Licht von der Beleuchtungslichtquelle (12) über die Lichtregulierungsvorrichtung (2) auf die biologischen Proben einfallen gelassen wird und Licht, das vom Probenbehälter (WP) nach unten übertragen wird, durch den Bildwandler (13) empfangen wird, **dadurch gekennzeichnet, dass**:

die Lichtregulierungsvorrichtung (2) ein Plattenelement (21) in Form einer flachen Platte umfasst, die auf den Probenbehälter (WP) aufgesetzt werden kann;

eine Vielzahl von Durchgangslöchern (21c) umfasst, die von einer Hauptoberflächenseite (21a) zu einer anderen Hauptoberflächenseite (21b) des Plattenelements (21) durchdringen, sind zweidimensional und benachbart entlang der einen Hauptoberfläche (21a) des Plattenelements (21) angeordnet sind;

jedes Durchgangsloch (21c) ist ein lichtleitender Pfad mit einer einheitlichen Querschnittsform entlang einer Normalrichtung zu der einen Hauptoberfläche (21a);

wobei eine Seitenwandfläche jedes Durchgangslochs (21c) eine lichtabsorbierende Eigenschaft aufweist; wobei

die Lichtregulierungsvorrichtung (2) das auf die eine Hauptoberfläche (21a) einfallende Licht unter einem Einfallswinkel durchlässt, der gleich oder kleiner als ein Winkel θ ist, wodurch das Licht auf den Probenbehälter (WP) fällt, und das unter einem Winkel einfallende Licht blockiert, der größer als der Winkel θ ist,

wobei der Winkel θ eine Beziehung der folgenden Gleichung erfüllt:

$$\tan\theta = D/L,$$

wobei D eine maximale Öffnungsweite in einem Querschnitt des lichtleitenden Pfads und L eine Länge der des lichtleitenden Pfads in Normalrichtung bezeichnet,

Wobei die mehreren Durchgangslöcher (21c) in einem konstanten Abstand P angeordnet sind und eine folgende Gleichung erfüllt ist:

$$P \le D \cdot (1/2 + T/L),$$

wobei T einen Abstand von der anderen Hauptfläche (21b) der Lichtregulierungsvorrichtung (2) zu einer inneren Bodenfläche des Probenbehälters (WP) bezeichnet,

wobei die Lichtregulierungsvorrichtung (2) auf einer oberen Fläche des Probenbehälters (WP) oder auf einem Abstandshalterelement, das zwischen der Regulierungsplatte (2) und der Vertiefungsplatte (WP) angeordnet ist, platziert ist, und wobei die Lichtregelvorrichtung (2) die obere Fläche des Probenbehälters (WP) vollständig abdeckt.

2.  Bildgebungsverfahren nach Anspruch 1, wobei die Beleuchtungslichtquelle (12) diffuses Licht nach unten abstrahlt.

3.  Bildgebungsverfahren nach Anspruch 1 oder 2, wobei der Abstand P eine Beziehung der folgenden Gleichung erfüllt:

$$P \le NA \cdot (L/2 + T),$$

wobei NA eine numerische Blendeeinstellung des Beleuchtungslichts bezeichnet, die auf der Grundlage eines erforderlichen Kontrastwerts in der Abbildung bestimmt wird.

4.  Bildgebungsverfahren nach einem der Ansprüche 1 bis 3, wobei die Lichtregulierungsvorrichtung (2) einen Rahmen (22) umfasst, der Endflächen des Plattenelements (21) abdeckt, wobei sich die Endflächen von der einen Hauptfläche (21a) und der anderen Hauptfläche (21b) unterscheiden, und wobei die Lichtregulierungsvorrichtung (2) ein transparentes Abdeckelement (23) umfasst, das mindestens eine der einen Hauptfläche (21a) und der anderen Hauptfläche (21b) abdeckt.

5.  Bildgebungsverfahren nach einem der Ansprüche 1 bis 4, wobei das Plattenelement (21) eine Vielzahl von Streifenelementen mit einer Breite gleich der Länge der Durchgangslöcher (21c) in der Normalrichtung aufweist und die Vielzahl von Streifenelementen teilweise miteinander verbunden und in anderen Teilen als den verbundenen Teilen voneinander getrennt sind, wodurch die Durchgangslöcher (21c) gebildet werden.

6.  Bildgebungsverfahren nach Anspruch 5, wobei die Streifenelemente Metallfolien mit geschwärzten Oberflächen sind.

**7.** Bildgebungsverfahren nach einem der Ansprüche 1 bis 6, wobei die jeweiligen Querschnittsformen der Vielzahl von Durchgangslöchern (21c) gleich sind.

**8.** Bildgebungsverfahren nach Anspruch 7, wobei die Querschnittsform des Durchgangslochs (21c) eine polygonale Form ist.

**9.** Bildgebungsverfahren nach Anspruch 8, wobei die Querschnittsform des Durchgangslochs (21c) eine sechseckige Form mit parallel gegenüberliegenden Seiten ist.

**10.** Bildgebungsverfahren nach einem der Ansprüche 1 bis 9, wobei die Innenseiten der Durchgangslöcher (21c) mit einem transparenten Feststoff gefüllt sind.

**Revendications**

**1.** Procédé d'imagerie, comprenant :

le support horizontal d'un récipient à échantillons (WP) contenant des échantillons biologiques ;
l'agencement d'une source de lumière d'éclairage (12) au-dessus du récipient à échantillons (WP), d'un dispositif de régulation de lumière (2) entre la source de lumière d'éclairage (12) et le récipient à échantillons (WP) et d'un imageur (13) sous le récipient à échantillons (WP) ; et
l'imagerie des échantillons biologiques en amenant la lumière provenant de la source de lumière d'éclairage (12) à être incidente sur les échantillons biologiques via le dispositif de régulation de lumière (2) et la réception de lumière transmise vers le bas depuis le récipient à échantillons (WP) par l'imageur (13), **caractérisé en ce que** :

le dispositif de régulation de lumière (2) inclut un élément de plaque (21) sous forme d'une plaque plate pouvant être placée sur le récipient à échantillons (WP) ;
une pluralité de trous traversants (21c) pénétrant depuis un côté d'une première surface principale (21a) vers un côté autre surface principale (21b) de l'élément de plaque (21) sont agencés à proximité et de manière bidimensionnelle le long de la première surface principale (21a) de l'élément de plaque (21) ;
chaque trou traversant (21c) est un chemin de guidage de lumière ayant une forme en coupe transversale uniforme le long d'une direction normale à la première surface principale (21a) ;
une surface de paroi latérale de chaque trou traversant (21c) présente une propriété d'absorption de lumière ; dans lequel
le dispositif de régulation de lumière (2) fait passer la lumière incidente sur la première surface principale (21a) selon un angle d'incidence inférieur ou égal à un angle $\theta$, en amenant ainsi la lumière à être incidente sur le récipient à échantillons (WP) et bloque la lumière incidente selon un angle supérieur à l'angle $\theta$, l'angle $\theta$ satisfaisant une relation d'une équation suivante :

$$\tan\theta = D/L,$$

où D désigne une largeur d'ouverture maximale dans une coupe transversale du chemin de guidage de lumière et L désigne une longueur du chemin de guidage de lumière dans la direction normale,
la pluralité de trous traversants (21c) sont agencés à un pas P constant et une équation suivante est satisfaite :

$$P \leq D \cdot (1/2 + T/L),$$

où T désigne une distance depuis l'autre surface principale (21b) du dispositif de régulation de lumière (2) jusqu'à une surface inférieure intérieure du récipient à échantillons (WP),
dans lequel le dispositif de régulation de lumière (2) est placé sur une surface supérieure du récipient à échantillons (WP), ou sur un élément d'espacement coincé entre la plaque de régulation (2) et la plaque à cavités (WP), et
dans lequel le dispositif de régulation de lumière (2) recouvre entièrement la surface supérieure du récipient à échantillons (WP).

**2.** Procédé d'imagerie selon la revendication 1, dans lequel la source de lumière d'éclairage (12) émet une lumière diffusée vers le bas.

**3.** Procédé d'imagerie selon la revendication 1 ou 2, dans lequel le pas P satisfait une relation d'une équation suivante :

$$P \leq NA \cdot (L/2 + T),$$

où NA désigne une ouverture numérique de lumière d'éclairage qui est déterminée sur la base d'une valeur de contraste requise dans l'imagerie.

**4.** Procédé d'imagerie selon l'une quelconque des revendications 1 à 3, dans lequel le dispositif de régulation d'imagerie (2) inclut un cadre (22) qui recouvre des surfaces d'extrémité de l'élément de plaque (21), les surfaces d'extrémité étant différentes de la première surface principale (21a) et de l'autre surface principale (21b), et dans lequel le dispositif de régulation de lumière (2) inclut un élément de protection transparent (23) qui recouvre au moins l'une parmi la première surface principale (21a) et l'autre surface principale (21b).

**5.** Procédé d'imagerie selon l'une quelconque des revendications 1 à 4, dans lequel l'élément de plaque (21) inclut une pluralité d'éléments de bandes ayant une largeur égale à la longueur des trous traversants (21c) dans la direction normale, et la pluralité d'éléments de bandes sont partiellement reliés et séparés les uns des autres dans des parties autres que des parties reliées, en formant ainsi les trous traversants (21c).

**6.** Procédé d'imagerie selon la revendication 5, dans lequel les éléments de bandes sont des feuilles métalliques ayant des surfaces noircies.

**7.** Procédé d'imagerie selon l'une quelconque des revendications 1 à 6, dans lequel les formes en coupe transversale respectives de la pluralité de trous traversants (21c) sont les mêmes.

**8.** Procédé d'imagerie selon la revendication 7, dans lequel la forme en coupe transversale du trou traversant (21c) est une forme polygonale.

**9.** Procédé d'imagerie selon la revendication 8, dans lequel la forme en coupe transversale du trou traversant (21c) est une forme hexagonale ayant des côtés opposés parallèles.

**10.** Procédé d'imagerie selon l'une quelconque des revendications 1 à 9, dans lequel les intérieurs des trous traversants (21c) sont remplis d'un solide transparent.

F I G. 1

F I G. 2 A

F I G. 2 B

F I G. 2 C

FIG. 3

F I G. 4 A

F I G. 4 B

FIG. 5A

FIG. 5B

FIG. 5C

COMPARATIVE
EXAMPLE

FIG. 6A

Sc

21c

FIG. 6B

21d

FIG. 6C

21e

FIG. 6D

21f

FIG. 6E

21g

FIG. 6F

21h

21

FIG. 7A

FIG. 7B

| | WITHOUT REGULATION PLATE | WITH REGULATION PLATE |
|---|---|---|
| WHOLE | | |
| EN-LARGED | | |

F I G. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015118036 A
- EP 0296727 A2
- EP 1618349 A1
- US 2008088919 A1
- JP 2013205041 A